# EUROPÄISCHE PATENTSCHRIFT

(11) **EP 2 031 159 B1**
(45) Veröffentlichungstag und Bekanntmachung des Hinweises auf die Patenterteilung: **21.03.2012**
(21) Anmeldenummer: 08161981.9
(22) Anmeldetag: 07.08.2008
(51) Int. Cl.: E05B 17/00, B64C 1/14, E05C 5/00, E05C 9/08

(54) **Verriegelungsvorrichtung und dafür geeignete Betätigungseinheit**
Locking device and suitable actuation unit
Dispositif de verrouillage et unité d'actionnement appropriée

(30) Priorität: 28.08.2007 DE 102007040572
(43) Veröffentlichungstag der Anmeldung: 04.03.2009
(73) Patentinhaber: SFS intec Holding AG, 9435 Heerbrugg (CH)
(72) Erfinder: Costabel, Sascha, 75443 Ötisheim (DE)

(56) Entgegenhaltungen:
- EP-A- 0 496 976
- FR-A- 2 311 672
- GB-A- 2 289 713

## Beschreibung

Die Erfindung betrifft eine Verriegelungsvorrichtung für einen Lukendeckel od. dgl., insbesondere im Kabinenboden eines Flugzeuges, mit mindestens einem Riegel mit einem ortsfesten Verriegelungsblock, den der Riegel beim Verriegeln erfasst, und mit mindestens einer Einrichtung zum Betätigen des Riegels, wobei der Riegel in einem an dem Lukendeckel od. dgl. befestigten Lagerbock schwenkbar gelagert und der Vierriegelungsblock so ausgebildet ist, dass sich der Riegel beim Entriegeln mit seinem freien Ende auf einer Schulter abstützt, die an dem ortsfesten Verriegelungsblock ausgebildet ist, so dass der Lagerbock relativ zu dem Riegel verschwenkt und der Lukendeckel od. dgl. angehoben wird.

Bei großen Langstreckenflugzeugen wie dem Airbus A 380-800 befindet sich unter dem Hauptdeck für die Passagiere ein Unterdeck mit einer Ruhekabine für die Mannschaft des Flugzeuges. Es ist notwendig, dass die Mannschaft in einem Notfall die Ruhekabine über einen Notausgang verlassen kann, der über eine Öffnung in dem Kabinenboden des Hauptdecks in die Passagierkabine führt. Dieser Notausgang ist als eine Notausstiegsluke ausgebildet, die einen Lukendeckel aufweist, der im geschlossenen Zustand bündig mit dem Kabinenboden abschließt. Es ist weiter notwendig, dass der Lukendeckel von außen geöffnet und geschlossen und von innen, d.h. von der Mannschaftsruhekabine her zumindest geöffnet werden kann.

Aus der EP 0 488 494 A1 ist eine motorisch betätigte Verriegelungsvorrichtung der eingangs genannten Art bekannt, die bei einem Cabrioverdeck eingesetzt wird. Die Verriegelungsvorrichtung hat eine Gewindespindel zum Bewegen einer Antriebsmutter. Diese betätigt über ein Verbindungsglied ein um eine Drehachse verdrehbares Drehelement, an dem zum Verriegeln des Cabrioverdecks an einem Flansch des Rahmens der Windschutzscheibe ein Haken auf einer Schwenkachse schwenkbar gelagert ist. Wenn das Verbindungsglied in eine Richtung bewegt wird, wird das Drehelement um die Drehachse verdreht. Das ergibt eine Schubbewegung des Hakens auf einer Kreisbahn um die Drehachse. Zusätzlich wird dabei der Haken noch mit Hilfe von Nocken an einem Lagerbock um die Schwenkachse verschwenkt. Die Einrichtung zum Betätigen des Hakens ist somit ein Schub-/Schwenk-Mechanismus, durch den der Haken verschiebbar und verschwenkbar ist. Die bekannte Verriegelungsvorrichtung bietet nicht die Möglichkeit, das Cabrioverdeck beim Öffnen auch anzuheben, ungeachtet dessen, ob das Cabrioverdeck durch zusätzliches Gewicht belastet ist oder nicht. Eine zusätzliche Gewichtsbelastung könnte zum Beispiel durch Schnee verursacht werden. Das wäre aber dann in einer Jahreszeit, in der ein Cabrioverdeck normalerweise ohnehin nicht geöffnet wird, so dass sich die Forderung, das Cabrioverdeck unter Gewichtsbelastung anheben können zu müssen, bei der bekannten Verriegelungsvorrichtung nicht stellt. Anders ist das bei einem Lukendeckel im Kabinenboden eines Flugzeuges, der auch zu öffnen sein muss, wenn ein Passagier auf ihm steht.

Aus der EP-A-0 496 976 ist eine Verriegelungsvorrichtung nach dem Oberbegriff des Patentanspruchs 1 bekannt. Die bekannte Verriegelungsvorrichtung hat einen Winkelhebel, welcher der Mannschaft erlaubt, den Lukendeckel von innen her manuell zu öffnen. Er erlaubt nicht, den Lukendeckel auch von außen zu öffnen. Darüber hinaus kann mit der bekannten Verriegelungsvorrichtung der Lukendeckel auch nur von innen wieder verriegelt werden.

Die FR-A-2 311 672 beschreibt ein Hebelgestänge, mit welchem ein Druckstück um eine Achse verschwenkbar ist, um ein Notausstiegsfenster entweder zu verriegeln oder aber zu entriegeln und gleichzeitig nach außen auszustoßen. Die Verriegelungsstellung ergibt sich dadurch, dass ein an dem Druckstück angelenkter Hebel des Hebelgestänges über seinen Totpunkt hinaus verstellt wird. Das Fenster könnte wie bei der vorgenannten bekannten Verriegelungsvorrichtung von außen weder geöffnet noch wieder verriegelt werden. Die Verriegelung ist nur von innen her durch manuelle Betätigung des Hebelgestänges möglich.

Aufgabe der Erfindung ist es, eine Verriegelungsvorrichtung der eingangs genannten Art so auszubilden, dass ein Lukendeckel od. dgl. nicht nur von innen, sondern auch von außen entriegelt und geöffnet und wieder geschlossen und verriegelt werden kann..

Diese Aufgabe ist erfindungsgemäß bei einer Verriegelungsvorrichtung der eingangs genannten Art dadurch gelöst, dass die Betätigungseinrichtung eine Antriebswelle ist, die in einer an dem Lukendeckel od. dgl. befestigten und wahlweise von innen oder außen betätigbaren Betätigunseinheit drehbar gelagert ist, dass mit der Antriebswelle ein Schub/Schwenk-Mechanismus gekuppelt ist, mit dem der Riegel in dem Lagerbock zusätzlich verschiebbar ist, und dass der Riegel in dem Lagerbock so gelagert ist, dass sich der Riegel auch beim Verriegeln mit seinem freien Ende auf der Schulter abstützt.

Bei der Verriegelungsvorrichtung nach der Erfindung wird bei Betätigung der Antriebswelle der Riegel durch den Schub/Schwenk-Mechanismus relativ zu dem Lagerbock zuerst aus einer Schließstellung in eine Öffnungsstellung verschoben und zusätzlich wird der Lagerbock relativ zu dem Riegel verschwenkt.

Erfindungsgemäß stützt sich der Riegel beim Verriegeln und beim Entriegeln mit seinem freien Ende auf der Schulter an dem ortsfesten Verriegelungsblock ab, so dass der Lagerbock relativ zu dem Riegel verschwenkt und der Lukendeckel od. dgl. geschlossen bzw. angehoben wird. Dabei dient der ortsfeste Verriegelungsblock als ein Widerlager, auf dem sich der Riegel zum Schwenken des Lukendeckels in die Öffnungs- und in die Schließstellung definiert abstützen kann. Der Lukendeckel od. dgl., an welchem der Lagerbock befestigt ist, wird so aus einer Schließstellung in eine Öffnungsstellung verschwenkt, in welcher z.B. in einem Flugzeug der dem Riegel benachbarte Rand des Lukendeckels wenigstens 20-25 mm über den Kabinenboden des Hauptdecks angehoben wird, selbst wenn der Lukendeckel mit bis zu 100 kg belastet sein sollte. Der Lukendeckel kann dann von Hand bis zu 180° geöffnet werden, indem er aufgeklappt und soweit verschwenkt wird, bis er auf dem Kabinenboden ruht, so dass die Notausstiegsluke durch die Mannschaft unbehindert passiert werden kann. Die erfindungsgemäße Verriegelungsvorrichtung ist dabei so ausgebildet, dass der Lukendeckel nach Gebrauch aus der Stellung, in der er 20-25 mm angehoben ist, durch Druck von außen (d. h. von der Passagierkabine her) oder mit Hilfe der Betätigungseinheit wieder vollständig geschlossen und so der Riegel wieder in die Schließstellung gebracht werden kann.

Vorteilhafte Ausgestaltungen der Verriegelungsvorrichtung nach der Erfindung bilden die Gegenstände der abhängigenAnsprüche.

Wenn in einer Ausgestaltung der Verriegelungsvorrichtung nach der Erfindung der Schub/Schwenk-Mechanismus ein Hebelgestänge aufweist, das die Drehbewegung der Antriebswelle in eine Schub/Schwenkbewegung des Riegels umwandelt, lässt sich auf einfache Weise durch Drehen der Antriebswelle die erwünschte Schub/Schwenkbewegung des Riegels erzielen.

Wenn in einer weitere Ausgestaltung der Verriegelungsvorrichtung nach der Erfindung der Riegel mindestens ein Führungselement aufweist, das auf mindestens einer Kurvenbahn des Lagerbocks geführt ist, lässt sich die Bewegung des freien Endes des Riegels, mit dem der Lukendeckel ver- oder entriegelt wird, auf einfache Weise steuern.

Wenn in einer weiteren Ausgestaltung der Verriegelungsvorrichtung nach der Erfindung das Führungselement in Richtung Anlage an der Kurvenbahn federvorbelastet ist, lässt sich das Führungselement auf einfache Weise in gewünschte Endpositionen drängen und dabei in Anlage an der Kurvenbahn halten.

Wenn in einer weiteren Ausgestaltung der Verriegelungsvorrichtung nach der Erfindung die Kurvenbahn zwei Endpositionen des Führungselements festlegt, in denen der Riegel verriegelt bzw. entriegelt ist, und eine dritte Endposition, in welcher der Lukendeckel angehoben ist, lassen sich die Endstellungen der Schub/Schwenkbewegung des Riegels auf einfache Weise festlegen.

Wenn sich in einer weiteren Ausgestaltung der Verriegelungsvorrichtung nach der Erfindung der Riegel auf der Schulter abstützt, wenn sich das Führungselement in die dritte Endposition bewegt, führt diese Bewegung in die dritte Endposition schließlich zum Anheben des Lukendeckels od. dgl.

Wenn in einer weiteren Ausgestaltung der Verriegelungsvorrichtung nach der Erfindung das Hebelgestänge als ein Kniehebelgestänge ausgebildet ist, von welchem das eine Ende an dem Riegel und das andere Ende an der Antriebswelle angelenkt ist und sich die Achse des Kniegelenks bei der Relativschwenkbewegung zwischen Lagerbock und Riegel an den Riegel anlegt und die Öffnungsbewegung des Lukendeckels unterstützt, wird auf einfache Weise eine beträchtliche Kraftverstärkung erzielt, die es ermöglicht, den Lukendeckel auch dann aus der Schließstellung in die Öffnungsstellung sicher anzuheben, wenn der Lukendeckel mit bis zu 100 kg belastet sein sollte.

In einer weiteren Ausgestaltung der Verriegelungsvorrichtung nach der Erfindung hat diese eine Betätigungseinheit , die zwei unabhängig voneinander betätigbare Drehgriffe zum Drehen der Antriebswelle zum Betätigen des Schub/Schwenk-Mechanismus aufweist. Das gewährleistet zum einen, dass der Lukendeckel bei Bedarf von außen (von der Passagierkabine aus) oder innen (von der Mannschaftsruhekabine aus) wahlweise betätigbar ist, um den Lukendeckel zu öffnen oder zu schließen, also die Verriegelungsvorrichtung zu entriegeln und den Lukendeckel anzuheben oder die Verriegelungsvorrichtung zu verriegeln.

Wenn in einer weiteren Ausgestaltung der Verriegelungsvorrichtung nach der Erfindung mit jedem Drehgriff auf ein Kraftübertragungselement eingewirkt werden kann, wobei das Kraftübertragungselement des einen Drehgriffes an einem fest mit der Antriebswelle verbundenen Nocken angelenkt ist, wohingegen das Kraftübertragungselement des anderen Drehgriffes an einem weiteren Nocken angelenkt ist, der mit der Antriebswelle drehbar verbunden ist, ist gewährleistet, dass die Verriegelungsvorrichtung nach der Erfindung wahlweise mit dem einen oder mit dem anderen Drehgriff der Betätigungseinheit entriegelt oder zumindest von außen her auch wieder verriegelt werden kann.

Wenn in einer weiteren Ausgestaltung der Betätigungseinheit der Verriegelungsvorrichtung nach der Erfindung der weitere Nocken eine Schleppnase aufweist, die von einem mit der Antriebswelle fest verbundenen Schlepphebel mitnehmbar ist, wird auf zweckmäßige Weise dem Umstand Rechnung getragen, dass der Drehgriff auf dem Lukendeckel in der Passagierkabine bei geschlossenem Lukendeckel versenkt und verriegelt ist. Die vorliegende Ausgestaltung gewährleistet, dass auch unter diesem Umstand der andere Drehgriff innen in der Mannschaftsruhekabine trotzdem ungehindert betätigt werden kann, um den Lukendeckel zu entriegeln und zu öffnen.

Ausführungsbeispiele der Erfindung werden im Folgenden unter Bezugnahme auf die Zeichnungen beispielshalber beschrieben. Es zeigt:
- Fig. 1: eine perspektivische Gesamtansicht von einer bevorzugten Ausführungsform der Verriegelungsvorrichtung nach der Er- findung mit zwei Verriegelungseinheiten und einer Betäti- gungseinheit, die an der Unterseite eines Lukendeckels (nicht gezeigt) befestigt sind,
- Fig. 2a: als eine Einzelheit eine der Verriegelungseinheiten der Ver- riegelungsvorrichtung nach Fig. 1,
- Fig.2b: die Verriegelungseinheit nach Fig. 2a in auseinandergezo- gener Darstellung,
- Fig. 3a, 3b: in perspektivischer Darstellung eine Notausstiegsluke, bei der ein Lukendeckel, der mit der Verriegelungsvorrichtung nach Fig. 1 versehen ist, vollständig geöffnet bzw. ge- schlossen ist,
- Fig. 4: als eine Einzelheit den Lukendeckel nach Fig. 3a in Drauf- sicht,
- Fig. 4a-4c: jeweils als eine Einzelheit eine Schnittansicht nach der Li- nie IV-IV in Fig. 4, wobei der Lukendeckel in Fig. 4a verrie- gelt, in Fig. 4b entriegelt und in Fig. 4c angehoben darge- stellt ist, und
- Fig. 5a-5c: die Einzelheiten nach den Fig. 4a-4c jeweils in vergrößerter Darstellung und zusätzlich schematisch eine Verriege- lungseinheit und die Bewegungen eines Riegels derselben zwischen den in den Fig. 4a-4c gezeigten Stellungen.

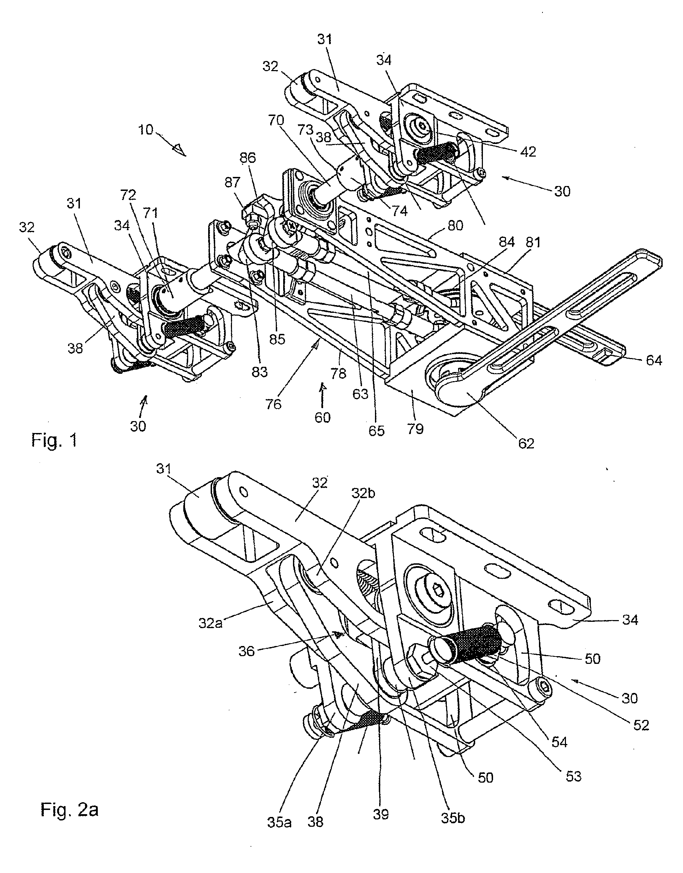

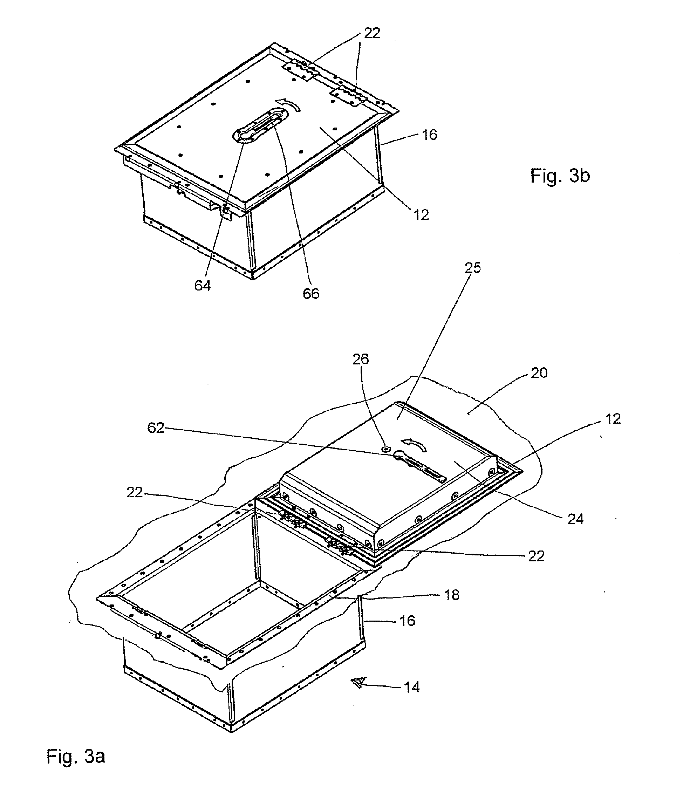

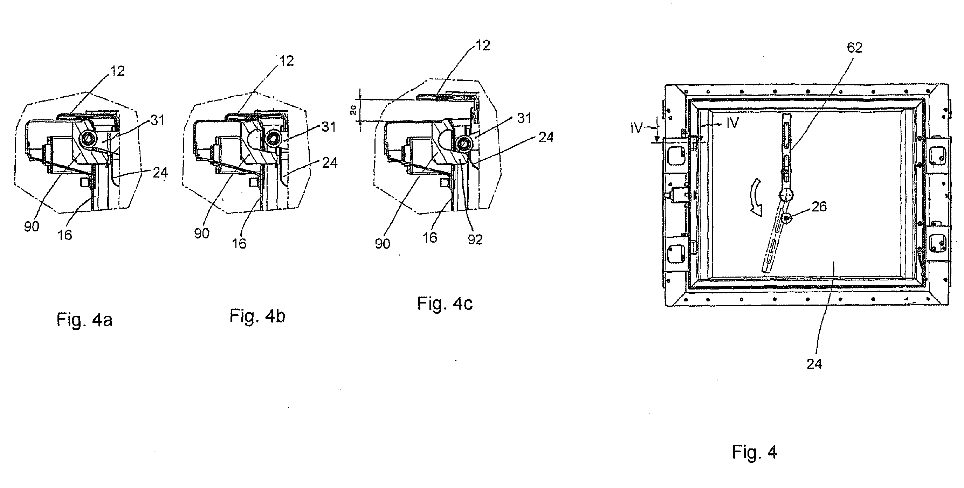

Ein bevorzugtes Ausführungsbeispiel einer insgesamt mit 10 bezeichneten Verriegelungsvorrichtung nach der Erfindung ist in Fig. 1 in einer perspektivischen Ansicht schräg von unten gezeigt. Oberhalb der Verriegelungsvorrichtung 10 befindet sich ein in Fig. 1 nicht dargestellter Lukendeckel 12 (gezeigt in den Fig. 3 und 4), an dessen Unterseite die Verriegelungsvorrichtung 10 mittels nicht dargestellter Schrauben befestigt ist. Der Lukendeckel 12 mit der Verriegelungsvorrichtung 10 ist Teil einer in Fig. 3a insgesamt mit 14 bezeichneten Notausstiegsluke. Die Notausstiegsluke 14 umfasst einen geschweißten Rahmen 16 mit etwa rechteckigem Querschnitt, der an seinem oberen Umfang mit einem vorstehenden Rand 18 versehen ist. Mit dem Rand 18 ist die Notausstiegsluke 14 auf einem Kabinenboden 20 eines Flugzeuges befestigt, der in Fig. 3a in weggebrochener Darstellung angedeutet ist. Der Lukendeckel 12 ist durch zwei Scharniere 22 mit dem Rand 18 des Rahmens 16 verbunden. In Fig. 3a ist der Lukendeckel 12 in aufgeklappter Stellung gezeigt, in welcher er auf dem Kabinenboden 20 aufliegt. In Fig. 3b ist der Lukendeckel 12 in geschlossener Stellung gezeigt, in welcher er auf dem Rahmen 18 aufliegt und mit dem Kabinenboden 20 im Wesentlichen bündig ist. Die Notausstiegsluke 14 kann also geschlossen werden, indem der Lukendeckel 12 zugeklappt wird, d. h. aus der in Fig. 3a gezeigten Stellung um 180° in die in Fig. 3b gezeigte Stellung verschwenkt wird. Fig. 3b zeigt demgemäß den geschlossenen Lukendeckel 12 in einer Draufsicht auf seine Außenseite, die der Passagierkabine zugewandt ist, welche sich oberhalb des Kabinenbodens 20 befindet. Unterhalb des Kabinenbodens 20 befindet sich eine Mannschaftsruhekabine, wie eingangs erläutert.

Die Verriegelungsvorrichtung 10 umfasst in dem hier dargestellten und beschriebenen Ausführungsbeispiel zwei in Fig. 1 insgesamt jeweils mit 30 bezeichnete Verriegelungseinheiten und eine in Fig. 1 insgesamt mit 60 bezeichnete Betätigungseinheit. Die beiden Verriegelungseinheiten 30 haben den gleichen Aufbau, weshalb im Folgenden lediglich die in Fig. 1 links dargestellte Verriegelungseinheit 30, die in Fig. 2a als Einzelheit dargestellt ist, mehr ins Einzelne gehend beschrieben wird. Die Betätigungseinheit 60 hat eine Antriebswelle 70 mit zwei Abtriebsenden 72, 74, mit denen die Verriegelungseinheiten 30 jeweils über eine Hülse 71 bzw. 73 gekuppelt sind. Die Betätigungseinheit 60 ist mit Hilfe von zwei Drehgriffen betätigbar, und zwar einem inneren Drehgriff 62 und einem äußeren Drehgriff 64. Der äußere Drehgriff 64 ist gemäß Fig. 3b in einer Griffmulde 66 angeordnet. Zum Betätigen wird er an einem Ende um 30° aus der Griffmulde 66 angehoben, um dann an seinem anderen Ende um 90° verdreht zu werden. Die Verriegelungsvorrichtung 10 ist durch ein nur in Fig. 3a gezeigtes Gehäuse 24 abgedeckt. In der Grundstellung ist der innere Drehgriff 62 zu der benachbarten Gehäuseseite parallel. Er ist mit einem Ende um 30° aus der Grundstellung anhebbar, um dann mit seinem anderen Ende um 160° bis in Anlage an einem vorstehenden Bolzen 26 verdreht zu werden, wie in Fig. 4 strichpunktiert angedeutet.

Die verschiedenen Einheiten der Verriegelungsvorrichtung 10 werden nun einzeln näher beschrieben. Anschließend wird die Arbeitsweise der Verriegelungsvorrichtung 10 beschrieben.

Die Betätigungseinheit 60 hat gemäß der Darstellung in Fig. 1 ein Gestell 76, das zwei abstehende parallele Schenkel 76, 78 hat, in deren freien Enden jeweils die Antriebswelle 70 mittels Wälzlagern drehbar gelagert ist. Die Drehbewegung der Drehgriffe 62, 64 wird durch zwei als Schubstangen ausgebildete Kraftübertragungselemente 63 bzw. 65 und zwei Nocken 83 bzw. 85 auf die Antriebswelle 70 übertragen.

Das Gestell 76 hat an seinem in Fig. 1 rechten Ende zwei die Schenkel 78, 80 fest miteinander verbindende Lagerplatten 79, 81, in denen der innere Drehgriff 62 bzw, der äußere Drehgriff 64 drehbar gelagert sind. Durch den Drehgriff 64 wird ein Drehteller 84 verdreht, an welchem das Kraftübertragungselement 65 mit einem Universalgelenk exzentrisch angelenkt ist. Auf entsprechende Weise wird die Drehbewegung des Drehgriffes 62 auf das Kraftübertragungselement 63 übertragen. Der entsprechende Drehteller ist in Fig. 1 aber nicht sichtbar. Das Kraftübertragungselement 63 des inneren Drehgriffes 62 ist mit seinem anderen Ende an dem Nocken 83 angelenkt, der mit der Antriebswelle 70 fest verbunden ist. Das Kraftübertragungselement 65 des äußeren Drehgriffes 64 ist mit seinem anderen Ende an dem Nocken 85 angelenkt, der mit der Antriebswelle 70 drehbar verbunden ist, d.h. auf der Antriebswelle 70 drehbar gelagert ist. Der Nocken 85 weist aber eine Schleppnase 86 auf, die von einem mit der Antriebswelle 70 fest verbundenen Schlepphebel 87 mitnehmbar ist.

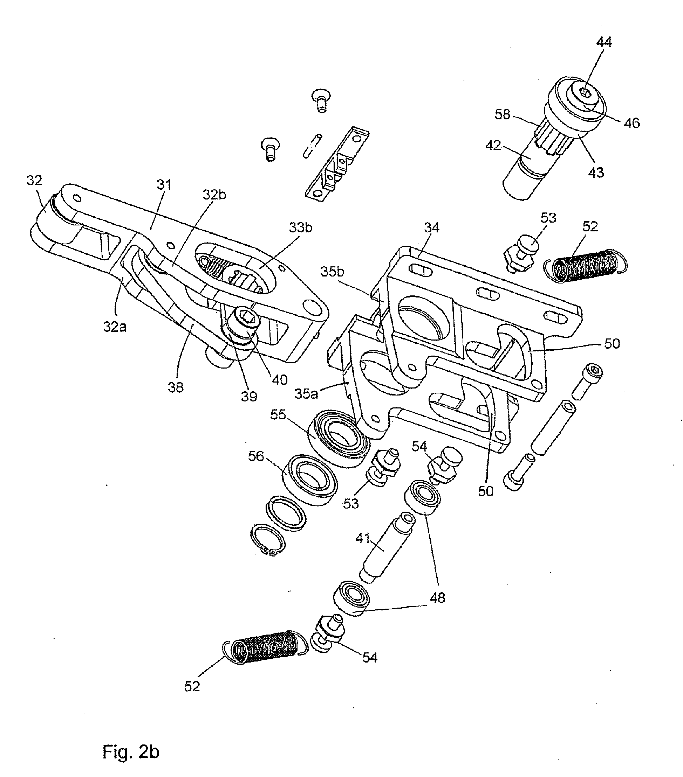

Die Verriegelungseinheit 30 nach Fig. 2a weist einen durch die Antriebswelle 70 betätigbaren Riegel 31 auf. Der Riegel 31 ist in einem an dem Lukendeckel 12 mit Schrauben (nicht dargestellt) befestigten Lagerbock 34 durch einen insgesamt mit 36 bezeichneten Schub/Schwenk-Mechanismus verschiebbar und schwenkbar gelagert. Der Schub/Schwenk-Mechanismus 36 weist ein Hebelgestänge auf, das als ein Kniehebelgestänge aus zwei Hebeln 38, 39 ausgebildet ist. Das Kniegelenk des Kniehebelgestänges hat eine Achse 40, die mit verdickten Enden auf beiden Seiten des Kniegelenks nach außen vorsteht, aber nur so weit, dass das Kniegelenk zwischen zwei Gabelarmen 35a, 35b des Lagerbockes 34 unbehindert beweglich ist. Das zu dem Kniegelenk entgegengesetzte freie Ende des Hebels 38 ist in einer Gabelkonstruktion des Riegels 31 angelenkt. Das zu dem Kniegelenk entgegengesetzte freie Ende des Hebels 39 ist gemäß der Darstellung in Fig. 2b mit einer keilnutverzahnten Bohrung versehen, in die eine Keilnutverzahnung 58 eines in den Gabelarmen 35a, 35b mittels Wälzlagern 55, 56 drehbar gelagerten Bolzens 42 formschlüssig einführbar ist. Der Bolzen 42 bildet eine Verlängerung der Antriebswelle 70, mit der er formschlüssig gekuppelt ist. Das die beiden Hebel 38, 39 aufweisende Kniehebelgestänge erstreckt sich in einer Ausnehmung in dem Riegel 31, die durch dessen Gabelkonstruktion gebildet ist. Aufgrund dieser Konstruktion hat der Riegel 31 zwei Gabelarme 32a, 32b. Die Gabelarme 32a, 32b sind benachbart zu den beiden axialen Stirnseiten des keilnutverzahnten Endes des Hebels 39 jeweils mit einem sich in Längsrichtung des Riegels 31 erstreckenden Langloch 33a, 33b versehen, von denen nur das Langloch 33b in den Fig. 2a und 2b sichtbar ist. Der Bolzen 42 hat eine Ringschulter 43, welche in das Langloch 32b des Riegels 31 passt, so dass dieser um die Ringschulter 43 verschwenkbar, aber auch relativ zu dem Bolzen 42 verschiebbar ist. Der Bolzen 42 hat an seinem äußeren Ende eine innere Drehmitnahme 44, die im Querschnitt sechseckig ist und in die ein im Querschnitt sechseckiges Stiftende der Antriebswelle 70 einführbar ist, welche dabei mit der Hülse 71 den Bolzen 42 an einer äußeren Ringschulter 46 übergreift.

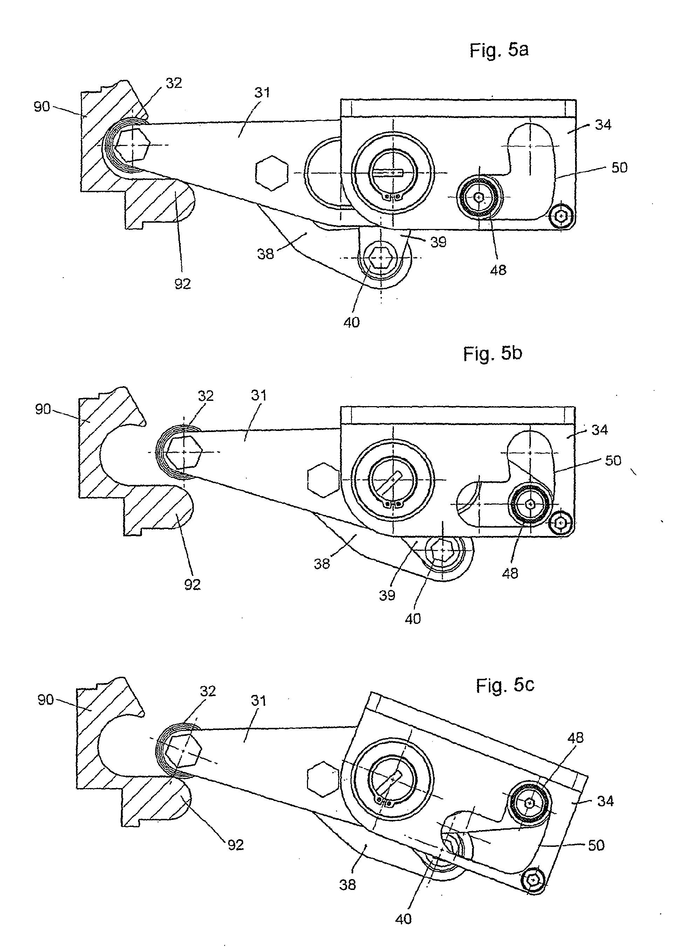

Wenn sich die Antriebswelle 70 dreht, wird der Hebel 39 wegen der Keilnutverzahnungen des Bolzens 42 und des Hebels 39 um die Achse des Bolzens 42 verschwenkt. Aufgrund des Kniegelenks wird diese Verschwenkbewegung in eine Verschiebebewegung umgesetzt, durch die sich der Riegel 31 in Fig. 2a nach rechts oder links bewegt. So wird die Drehbewegung der Antriebswelle 70 in eine Schub/Schwenkbewegung des Riegels 31 umgewandelt. An seinem in den Fig. 2a und 2b rechten Ende weist der Riegel 31 auf seinen beiden axialen Seiten jeweils ein an dem Riegel 31 auf einer Achse 41 drehbar gelagertes Führungselement 48 auf. Jedes Führungselement 48 besteht hier aus einem Wälzlager. Jedes Führungselement 48 ist auf einer Kurvenbahn 50 des Lagerbocks 34 geführt. Jedes Führungselement 48 ist in Richtung Anlage an der Kurvenbahn 50 federvorbelastet. Die Federvorbelastung erfolgt durch jeweils eine Zugfeder 52. Jede Zugfeder 52 ist an zwei Federschrauben 53, 54 eingehängt, die in eine Gewindebohrung in dem Gabelarm 35b bzw. in eine Gewindebohrung der sich durch den Riegel 31 erstreckenden Achse 41, welche an ihren Enden die Führungselemente 48 trägt, eingeschraubt sind. Die Kurvenbahn 50 legt zwei Endpositionen des Führungselements 48 fest, in denen der Riegel 31 verriegelt bzw. entriegelt ist, und eine dritte Endposition, in welcher der Lukendeckel 12 angehoben ist, wie es durch die Einzelheiten in den Fig. 4a - 4c und in den Fig. 5a - 5c gezeigt ist, auf die nun näher eingegangen wird.

In den Fig. 5a und 4a ist der Riegel 31 in Schließstellung verriegelt. Das Führungselement 48 befindet sich an einem Ende der abgewinkelt ausgebildeten Kurvenbahn 50 des Lagerbocks 34. Wenn die Antriebswelle 70 in der Darstellung in den Fig. 5a - 5c im Gegenuhrzeigersinn gedreht wird, verschiebt sich der Riegel 31 in Fig. 5b nach rechts, bis sich das Führungselement 48 in dem Winkel zwischen den beiden Schenkeln der Kurvenbahn 50 befindet, wie es in Fig. 5b gezeigt ist. Das ist die entriegelte Stellung, die auch in Fig. 4b gezeigt ist. Wenn die Antriebswelle 70 weiter im Gegenuhrzeigersinn gedreht wird, verschiebt sich der Hebel 32 nicht weiter nach rechts, das Führungselement 48 wandert aber auf der Kurvenbahn 50 nach oben in die andere Endposition, wobei sich der Riegel 31 um die Achse der Antriebswelle 70 und des Bolzens 42 gegenüber dem Lagerbock 34 in die in Fig. 5c gezeigte Schwenkposition bewegt, in der der ursprünglich horizontal angeordnete Lagerbock 34 mit dem Lukendeckel 12 im Uhrzeigersinn verschwenkt ist, so dass der Riegel 31 und der Lukendeckel 12 nun in der Öffnungsstellung sind, die in Fig. 4c gezeigt ist. Bei der Bewegung des Riegels 31 aus der Stellung nach Fig. 5b in die Stellung nach Fig. 5c drückt jedes überstehende verdickte Ende der Achse 40 des Kniegelenks auf die Unterseite der Gabelarme 32a, 32b des Riegels 31 und unterstützt die Schwenkbewegung des Riegels 31 in die Öffnungsstellung, was aufgrund des Kniehebelgestänges mit einer großen Kraftverstärkung verbunden ist, die ein sicheres Öffnen des Lukendeckels 12 auch dann gewährleistet, wenn dieser mit einem Gewicht von bis zu 100 kg belastet sein sollte.

Abschließend wird nun die Arbeitsweise der Verriegelungsvorrichtung 10 beschrieben, wobei deutlich werden wird, wie durch Betätigen der Drehgriffe 62, 64 die Antriebswelle 70 gedreht und dadurch der Schub/Schwenk-Mechanismus 36 betätigt wird.

Es sei angenommen, dass der Lukendeckel 12 geschlossen, und die Verriegelungsvorrichtung 10 verriegelt ist. In diesem Fall nimmt der innere Drehgriff 62 die in Fig. 3a gezeigte (und in Fig. 4 mit ausgezogenen Linien dargstellte) Stellung ein, und der äußere Drehgriff 64 nimmt die in Fig. 3b gezeigte Stellung ein, in welcher er sich in der Griffmulde 66 befindet. Die Verriegelungseinheit 30 ist dabei in der in Fig. 5a gezeigten Stellung, in welcher der Riegel 31 nach links verschoben ist und in einen an dem Rahmen 16 befestigten Verriegelungsblock 90 einfasst. Das Kniegelenk der Hebel 38, 39 befindet sich in dieser Stellung unterhalb der Achse des Bolzens 42 und etwas nach links verschoben in Fig. 5a. Das Führungselement 48 befindet sich in der unteren linken Endposition auf der Kurvenbahn 50.

Wenn nun angenommen wird, dass der äußere Drehgriff 64 um 30° angehoben und dann um 90° verdreht wird, dann dreht sich der innere Drehgriff 62 mit, weil das dem äußeren Drehgriff 64 zugeordnete Kraftübertragungselement 65 den auf der Antriebswelle 70 drehbaren Nocken 85 betätigt, der mit seiner Schleppnase 86 den Schlepphebel 87 mitnimmt und dadurch die Antriebswelle 70 verdreht. Diese nimmt dabei den drehfest mit ihr verbundenen Nocken 85 mit, welcher dem inneren Drehgriff 62 zugeordnet ist, so dass letzterer sich mitdreht. Gleichzeitig wird durch die Drehbewegung der Antriebswelle 70 aus der in Fig. 5a gezeigten Stellung in die in Fig. 5b gezeigte Stellung der Riegel 31 in die in Fig. 5b gezeigte Stellung nach rechts verschoben. Das Kniehebelgestänge wird dabei um die Achse des Bolzens 42 im Gegenuhrzeigersinn in die in Fig. 5b gezeigte Stellung verschwenkt, wobei sich die über die Hebel 38, 39 überstehenden Enden der Kniegelenkachse 40 an die Unterseite der Gabelarme 32a, 32b des Riegels 31 anlegen. Bei seiner Mitbewegung mit dem äußeren Drehgriff 64 hat sich der innere Drehgriff 62 in die in Fig. 4 strichpunktiert dargestellte Stellung bewegt, in welcher er an dem Bolzen 26 anliegt. Die Enden der Kniehebelachse 40 schwenken nun den Riegel 31 aus der in Fig. 5b gezeigten Stellung in die in Fig. 5c gezeigte Stellung, in welcher sich das freie Ende des Riegels 31 auf einer Schulter 92 des Verriegelungsblockes 90 abstützt. Da der Riegel 31 mit dem linken Ende seines Langloches 33a, 33b bereits an dem Bolzen 42 anliegt, sich also in Fig. 5b nicht weiter nach rechts bewegen kann, wird das Führungselement 48 in die in Fig. 5c gezeigte Endposition bewegt, in der der Lagerbock 34 wie dargestellt verschwenkt und der Lukendeckel 12 geöffnet ist.

Wenn nun angenommen wird, dass die Verriegelungsvorrichtung 10 mit Hilfe des inneren Drehgriffes 62 entriegelt werden soll, wobei sich die Verriegelungsvorrichtung 10 in der gleichen Ausgangsstellung wie zuvor befindet, wird der innere Drehgriff 62 aus der Grundstellung um 30° angehoben und um 160° verdreht. Da der äußere Drehgriff 64 in der Griffmulde 66 liegt, darf er sich nicht mitdrehen. Zu diesem Zweck ist der äußere Drehgriff 64 bei Betätigung des inneren Drehgriffes 62 entkoppelt. Wenn der innere Drehgriff 62 die Schwenkbewegung um 160° ausführt, betätigt das ihm zugeordnete Kraftübertragungselement 63 den mit der Antriebswelle 70 drehfest verbundenen Nocken 83, so dass die Antriebswelle 70 entsprechend verdreht wird. Dabei bewegt sich der Schlepphebel 87 an der Antriebswelle 70 von der Schleppnase 86 an dem Nocken 85, welcher dem äußeren Drehgriff 64 zugeordnet ist, weg. Der äußere Drehgriff 64 macht also die Drehbewegung des inneren Drehgriffes 62 nicht mit. Der Riegel 31 führt dabei die gleichen Bewegungen aus, die in den Fig. 5a - 5c dargestellt und vorstehend beschrieben sind. Weiter ist dadurch sichergestellt, dass der Lukendeckel 12 von innen geöffnet werden kann, obgleich der äußere Drehgriff 64 in seiner verriegelten Stellung innerhalb der Griffmulde 66 ist.

Zum Wiederverriegeln der Verriegelungsvorrichtung 10 können zwar auch die Drehgriffe 62, 64 betätigt werden, üblicherweise wird es jedoch so sein, dass der Lukendeckel 12 so weit geschlossen wird, bis der Riegel 31 auf der Schulter 92 aufliegt. Durch Druck von außen auf den Lukendeckel 12 wird dieser dann geschlossen und verriegelt, wobei die mit Bezug auf die Fig. 5a - 5c beschriebenen Bewegungen des Riegels 31 und des Lagerbockes 34 in umgekehrter Reihenfolge und Richtung ablaufen.

## Patentansprüche

1. Verriegelungsvorrichtung (10) für einen Lukendeckel (12) od.dgl., insbesondere im Kabinenboden (20) eines Flugzeuges, mit mindestens einem Riegel (31) mit einem ortsfesten Verriegelungsblock (90), den der Riegel (31) beim Verriegeln erfasst, und mit mindestens einer Einrichtung zum Betätigen des Riegels (31), wobei der Riegel (31) in einem an dem Lukendeckel (12) od. dgl. befestigten Lagerbock (34) schwenkbar gelagert und der Verriegelungsblock (90) so ausgebildet ist, dass sich der Riegel (31) beim Entriegeln mit seinem freien Ende (32) auf einer Schulter (92) abstützt, die an dem ortsfesten Verriegelungsblock (90) ausgebildet ist, so dass der Lagerbock (34) relativ zu dem Riegel (31) verschwenkt und der Lukendeckel (12) od. dgl. angehoben wird, **dadurch gekennzeichnet, dass** die Betätigungseinrichtung eine Antriebswelle (70) ist, die in einer an dem Lukendeckel (12) od. dgl. befestigten und wahlweise von innen oder außen betätigbaren Betätigungseinheit (60) drehbar gelagert ist, dass mit der Antriebswelle (70) ein Schub/Schwenk-Mechanismus (36) gekuppelt ist, mit dem der Riegel (31) in dem Lagerbock (34) zusätzlich verschiebbar ist, und dass der Riegel (31) in dem Lagerbock (34) so gelagert ist, dass sich der Riegel (31) auch beim Verriegeln mit seinem freien Ende auf der Schulter (92) abstützt.

2. Verriegelungsvorrichtung nach Anspruch 1, **dadurch gekennzeichnet, dass** der Schub/Schwenk-Mechanismus (36) ein Hebelgestänge (38, 39) aufweist, das die Drehbewegung der Antriebswelle (70) in eine Schub/- Schwenkbewegung des Riegels (31) umwandelt.

3. Verriegelungsvorrichtung nach Anspruch 2, **dadurch gekennzeichnet, dass** der Riegel (31) mindestens ein Führungselement (48) aufweist, das auf mindestens einer Kurvenbahn (50) des Lagerbocks (34) geführt ist.

4. Verriegelungsvorrichtung nach Anspruch 3, **dadurch gekennzeichnet, dass** das Führungselement (48) in Richtung Anlage an der Kurvenbahn (50) federvorbelastet ist.

5. Verriegelungsvorrichtung nach Anspruch 4, **dadurch gekennzeichnet, dass** die Kurvenbahn (50) zwei Endpositionen des Führungselements (48) festlegt, in denen der Riegel (31) verriegelt bzw. entriegelt ist, und eine dritte Endposition, in welcher der Lukendeckel (12) od. dgl. angehoben ist.

6. Verriegelungsvorrichtung nach Anspruch 5, **dadurch gekennzeichnet, dass** sich der Riegel (31) auf der Schulter (92) abstützt, wenn sich das Führungselement (48) in die dritte Endposition bewegt.

7. Verriegelungsvorrichtung nach Anspruch 6, **dadurch gekennzeichnet, dass** das Hebelgestänge (38, 39) als ein Kniehebelgestänge ausgebildet ist, von welchem das eine Ende an dem Riegel (31) und das andere Ende an der Antriebswelle (70) angelenkt ist und sich die Achse (41) des Kniegelenks bei der Relativschwenkbewegung zwischen Lagerbock (34) und Riegel (31) an den Riegel (31) anlegt und die Öffnungsbewegung des Lukendeckels (12) od. dgl. unterstützt.

8. Verriegelungsvorrichtung nach einem der Ansprüche 1 bis 7 mit einer Betätigungseinheit (25), **dadurch gekennzeichnet, dass** die Betätigungseinheit (25) zwei unabhängig voneinander betätigbare Drehgriffe (62, 64) zum Drehen der Antriebswelle (70) zum Betätigen des Schub/Schwenk-Mechanismus (36) aufweist.

9. Verriegelungsvorrichtung nach Anspruch 8, **dadurch gekennzeichnet, dass** mit jedem Drehgriff (62, 64) auf ein Kraftübertragungselement (20) eingewirkt werden kann, wobei das Kraftübertragungselement (63) des einen Drehgriffes (62) an einem fest mit der Antriebswelle (70) verbundenen Nocken (83) angelenkt ist, wohingegen das Kraftübertragungselement (65) des anderen Drehgriffes (64) an einem weiteren Nocken (85) angelenkt ist, der mit der Antriebswelle (70) drehbar verbunden ist.

10. Verriegelungsvorrichtung nach Anspruch 9, **dadurch gekennzeichnet, dass** der weitere Nocken (85) eine Schleppnase (86) aufweist, die von einem mit der Antriebswelle (70) fest verbundenen Schlepphebel (87) mitnehmbar ist.

## Claims

1. A locking device (10) for a hatch cover (12) or the like, in particular in the cabin floor (20) of an aircraft, with at least one latch (31) with a stationary locking block (90) with which the latch (31) engages upon when locking takes place, and with at least one device for actuating the latch (31), wherein the latch (31) is pivotably mounted in a bearing block (34) secured to the hatch cover (12) or the like and the locking block (90) is so formed that, upon being unlocked, the latch (31) bears with its free end (32) on a shoulder (92) which is formed on the stationary locking block (90) so that the bearing block (34) is pivoted relative to the latch (31) and the hatch cover (12) or the like is raised, **characterised in that** the actuating device is a drive shaft (70) which is pivotably mounted in an actuating unit (60) which is secured to the hatch cover (12) or the like and which can be actuated either from the inside or outside, **in that** a push/pivot mechanism (36) is coupled to the drive shaft (70), by which the latch (31) can be additionally displaced in the bearing block (34), and in the latch (31) is so mounted in the bearing block (34) that, also when being locked, the latch (31) bears with its free end on the shoulder (92).

2. A locking device according to Claim 1, **characterised in that** the push/pivot mechanism (36) has a lever rod system (38,39) which converts the rotating motion of the drive shaft (70) into a push/pivot motion of the latch (31).

3. A locking device according to Claim 2, **characterised in that** the latch (31) has at least one guide element (48) which is guided on at least one cam path (50) of the bearing block (34).

4. A locking device according to Claim 3, **characterised in that** the guide element (48) is spring-preloaded towards application against the cam path (50).

5. A locking device according to Claim 4, **characterised in that** the cam path (50) defines two end positions of the guide element (48), in which the latch (31) is locked or unlocked, and a third end position in which the hatch cover (12) or the like is raised.

6. A locking device according to Claim 5, **characterised in that** the latch (31) bears on the shoulder (92) when the guide element (48) moves into the third end position.

7. A locking device according to Claim 6, **characterised in that** the lever rod system (38,39) is in the form of a toggle lever rod system, one end of which is articulated on the latch (31) and the other end of which is articulated on the drive shaft (70), and during the relative pivoting movement between the bearing block (34) and the latch (31) the axis (41) of the toggle joint is applied against the latch (31) and assists the opening movement of the hatch cover (12) or the like.

8. A locking device according to any one of Claims 1 to 7 with an actuating unit (25), **characterised in that** the actuating unit (25) has two rotary handles (62,64) which can be actuated independently of one another and which serve to turn the drive shaft (70) to actuate the push/pivot mechanism (36).

9. A locking device according to Claim 8, **characterised in that** each rotary handle (62,64) makes it possible to act on a force-transmitting element (20) [sic], wherein the force-transmitting element (63) of one rotary handle (62) is articulated on a cam (83) securely connected to the drive shaft (70), whereas the force-transmitting element (65) of the other rotary handle (64) is articulated on another cam (85) which is rotatably connected to the drive shaft (70).

10. A locking device according to Claim 9, **characterised in that** the other cam (85) has a follower projection (86) which can be entrained by a cam follower (87) securely connected to the drive shaft (70).

## Revendications

1. Dispositif de verrouillage (10) d'un couvercle de trappe (12) ou analogue, notamment dans le plancher de cabine (20) d'un avion, comportant au moins un verrou (31) avec un bloc de verrouillage (90), fixe, avec lequel le verrou (31) est en prise lors du verrouillage et au moins une installation pour actionner le verrou (31),
* le verrou (31) étant monté pivotant dans un bloc palier (34) fixé au couvercle de trappe (12) ou analogue, et le bloc de verrouillage (90) est réalisé pour que lors du déverrouillage le verrou (31) s'appuie par son extrémité libre (32) contre un épaulement (92) du bloc de verrouillage (90), fixe, de façon que le bloc palier (34) puisse basculer par rapport au verrou (31) et que le couvercle (12) ou analogue soit soulevé,
dispositif **caractérisé en ce que**
- l'installation d'actionnement comporte un arbre d'entraînement (70) monté à rotation dans le couvercle de trappe (12) ou analogue, en étant monté à rotation au choix par une unité d'actionnement (60) intérieure ou extérieure,
- un mécanisme de poussée et de basculement (36) étant couplé à l'arbre d'entraînement (70) qui peut coulisser le verrou (31) en plus dans le bloc palier (34), et
- le verrou (31) est monté dans le bloc palier (34) pour s'appuyer également lors du verrouillage, par son extrémité libre sur l'épaulement (92).

2. Dispositif de verrouillage selon la revendication 1,
**caractérisé en ce que**
le mécanisme de poussée/pivotement (36) comporte une tringlerie de levier (38, 39) transformant le mouvement de rotation de l'arbre d'entraînement (70) en un mouvement de poussée et de pivotement du verrou (31).

3. Dispositif de verrouillage selon la revendication 2,
**caractérisé en ce que**
le verrou (31) comporte au moins un élément de guidage (48) guidé par au moins un chemin de came (50) du bloc palier (34).

4. Dispositif de verrouillage selon la revendication 3,
**caractérisé en ce que**
l'élément de guidage (48) est précontraint par ressort en direction de l'appui contre le chemin de came (50).

5. Dispositif de verrouillage selon la revendication 4,
**caractérisé en ce que**
le chemin de came (50) définit deux positions de fin de course de l'élément de guidage (48) dans lesquelles le verrou (31) est verrouillé ou déverrouillé et une troisième position de fin de course dans laquelle le couvercle de trappe (12) ou analogue est soulevé.

6. Dispositif de verrouillage selon la revendication 5,
**caractérisé en ce que**
le verrou (31) s'appuie sur l'épaulement (92) lorsque l'élément de guidage (48) se déplace dans la troisième position de fin de course.

7. Dispositif de verrouillage selon la revendication 6,
**caractérisé en ce que**
la tringlerie de levier (38, 39) est réalisée sous la forme d'un levier à genouillère dont une extrémité est articulée au verrou (31) et l'autre extrémité à l'arbre d'entraînement (70) et l'axe (41) de l'articulation à genouillère s'applique lors du mouvement de pivotement relatif entre le bloc palier (34) et le verrou (31) contre le verrou (31) et soutient le mouvement d'ouverture du couvercle de trappe (12) ou analogue.

8. Dispositif de verrouillage selon l'une des revendications 1 à 7, comportant une unité d'actionnement (25),
**caractérisé en ce que**
l'unité d'actionnement (25) comporte deux poignées pivotantes (62, 64) actionnées indépendamment l'une de l'autre pour tourner l'arbre d'entraînement (70) et actionner le mécanisme de poussée et de basculement (36).

9. Dispositif de verrouillage selon la revendication 8,
**caractérisé en ce qu'**
un élément de transmission de force (20) agit sur chaque poignée tournante (62, 64),
* l'élément de transmission de force (63) d'une poignée tournante (62) étant articulé à une came (83) reliée solidairement à l'arbre d'entraînement (70), alors que l'élément de transmission de force (65) de l'autre poignée tournante (64) est articulé à une autre came (85) reliée en rotation à l'arbre d'entraînement (70).

10. Dispositif de verrouillage selon la revendication 9,
**caractérisé en ce que**
l'autre came (85) comporte un bec d'entraînement (86) actionné par un levier d'entraînement (87) solidaire de l'arbre d'entraînement (70).
